# EUROPÄISCHE PATENTSCHRIFT

(11) **EP 0 613 854 B1**
(45) Veröffentlichungstag und Bekanntmachung des Hinweises auf die Patenterteilung: **06.11.1996**
(21) Anmeldenummer: 94102447.3
(22) Anmeldetag: 18.02.1994
(51) Int. Cl.: B67C 3/28, G01F 23/22

(54) **Volumetrischer Getränkefüller**
Bottling machine with volumetric dosing
Machine d'embouteillage avec dosage volumétrique

(30) Priorität: 09.11.1993 DE 4338190; 27.02.1993 DE 4306120
(43) Veröffentlichungstag der Anmeldung: 07.09.1994
(73) Patentinhaber: ORTMANN + HERBST Maschinen- und Anlagenbau GmbH, 22309 Hamburg (DE)
(72) Erfinder: Lühmann, Peter, D-22309 Hamburg (DE); Schallnus, Harald, Dr., D-22393 Hamburg (DE)
(74) Vertreter: Schaefer, Konrad, Dipl.-Phys.

(56) Entgegenhaltungen:
- EP-A- 0 274 338
- EP-A- 0 418 005
- DE-A- 3 036 294
- DE-A- 4 030 081
- FR-A- 2 582 804
- US-A- 4 206 788
- US-A- 4 582 102

## Beschreibung

Die Erfindung betrifft einen Getränkefüller der im Oberbegriff des Anspruches 1 genannten Art.

Bei zur Zeit weithin üblichen Getränkefüllern erfolgt die Abmessung des Getränks durch Ermittlung des Füllpegels im Behälter.

Volumetrische Getränkefüller der eingangs genannten Art bestimmen dagegen das abzufüllende Getränkevolumen in einem Abmeßbehälter, aus dem die Behälter gefüllt werden. Damit ist der Vorteil erheblich höherer Füllgenauigkeit verbunden, da Exemplarstreuungen der Getränkebehälter nicht in die Meßgenauigkeit eingehen. Mit hochgenau gefertigten und angesteuerten Abmeßbehältern lassen sich wesentlich höhere Füllgenauigkeiten erreichen.

Bei Getränkefüllern der eingangs genannten Art wird das Volumen in den Abmeßbehältern dadurch abgemessen, daß diese bis zu bestimmten Pegeln aufgefüllt und/oder abgelassen werden. Es sind Steuereinrichtungen vorgesehen, die die entsprechenden Pegel erkennen und entsprechend das Auffüllen oder Ablaufen steuern.

Nach dem Stand der Technik sind zur Pegelerkennung Einrichtungen vorgesehen, die über Schwimmer- oder Tauchsonden die Pegelerkennung bewirken. Hieran nachteilig ist der hohe apparative Aufwand an jedem Abmeßbehälter.

Die Aufgabe der vorliegenden Erfindung besteht darin, einen Getränkefüller der eingangs genannten Art zu schaffen, bei dem die Volumensteuerung in den Abmeßbehältern auf einfachere Weise erfolgt.

Diese Aufgabe wird erfindungsgemäß mit den Merkmalen des Kennzeichnungsteiles des Anspruches 1 gelöst.

Bei dieser Konstruktion bestehen die Abmeßbehälter aus durchsichtigem Material, beispielsweise Glas, und laufen zu den kritischen Zeiten ihres Betriebszyklus, also z.B. dann, wenn das Auffüllen gestoppt werden muß, durch das Sichtfeld einer stationär neben dem Füller aufgestellten Videokamera, die mehrere Abmeßbehälter betrachtet und in diesen mittels einer Bildauswerteinrichtung den Füllpegel erkennt. Die Bildauswerteinrichtung erfaßt einen durch das Sichtfeld laufenden Abmeßbehälter und bestimmt in mehreren Winkelpositionen, z.B. laufend, den Pegel, um den Zeitpunkt zu ermitteln, an dem der Sollpegel erreicht wird. Die Bildauswerteinrichtung erkennt außerdem den zugehörigen Behälterplatz und gibt an ein den Auffüllstrom steuerndes Ventil ein Schließsignal. Alternativ oder zusätzlich - je nach Betriebsweise - kann auch beim Ablaufen ein Stoppegel auf dieselbe Weise ermittelt werden. Es sind dabei mehrere Betriebsweisen möglich, wobei beispielsweise der Abmeßbehälter zwischen einem gesteuerten oberen Pegel und einem gesteuerten unteren Pegel betrieben wird, wobei nur ein oberer Pegel gesteuert wird und der Abmeßbehälter leerläuft oder wobei der Abmeßbehälter vollgefüllt und bis zu einem gesteuerten unteren Pegel entleert wird.

Der Aufbau des Getränkefüllers läßt sich dadurch wesentlich vereinfachen. Es entfallen die nach dem Stand der Technik erforderlichen Pegelüberwachungseinrichtungen an jedem Abmeßbehälter. Es können ohnehin bereits für den Getränkefüller vorgesehene Datenverarbeitungseinrichtungen als Bildauswerteinrichtungen verwendet werden. Außerdem läßt sich die Umstellung auf andere abzufüllende Volumina - beispielsweise bei der Umstellung auf andere Behältergrößen - sehr einfach durch Programmumschaltung bewirken, ohne daß mechanische Umstellungen erforderlich sind. Die Getränkebehälter, in die abgefüllt werden soll, sind hinsichtlich ihrer Art - Glasflaschen, Kunststoffflaschen, Blechdosen - völlig unerheblich. Schließlich ist auch eine individuelle Steuerung einzelner Behälterplätze möglich, um Exemplarstreuungen der Plätze zu berücksichtigen.

Da die Ablaufbehälter einzeln auf Erreichen bestimmter Pegel überwacht und an den entsprechenden Behälterplätzen über Ventilsteuerung der Füllvorgang gesteuert wird, da also eine individuelle Einzelerkennung und -steuerung der Behälterplätze gegeben ist, kann ohne wesentliche Erhöhung des elektronischen Aufwandes mit relativ ungenau gefertigten Auffangbehältern gearbeitet werden, die beispielsweise erhebliche Exemplarstreuung aufweisen. Diese können nach Eichen und Ermitteln der erforderlichen Sollpegel von der Bildauswerteinrichtung jeweils auf Einstellung ihrer individuellen zugehörigen Sollpegel überwacht werden. Auf diese Weise können Exemplarstreuungen der Auffangbehälter zugelassen werden, was die Maschinenkosten verringert und beispielsweise auch den Einzelaustausch defekter Auffangbehälter wesentlich erleichtert.

Vorteilhaft sind die Merkmale des Anspruches 2 vorgesehen. Hierdurch ist es möglich, bis zu einem gewissen Pegel schneller aufzufüllen oder abzulassen und sodann unter Drosselung langsamer, um den jeweiligen Stoppegel sehr präzise einstellen zu können.

Weiterhin vorteilhaft sind die Merkmale des Anspruches 3 vorgesehen. Wird beispielsweise das Auffüllen des Abmeßbehälters bis zu einem Stoppegel überwacht und wird dabei festgestellt, daß der Stoppegel nicht innerhalb des Sichtfeldes der Kamera liegt, so wird der Startwinkel, bei dem das Auffüllen beginnt, entsprechend verstellt. Es wird dadurch vermieden, den Aufstellort der Kamera ändern zu müssen. Es kann auf diese Weise rasch die bei Änderung der Füllerdrehzahl (bei kontanter Auffüllzeit) erforderliche Veränderung des zum Auffüllen benötigten Umlaufwinkels berücksichtigt werden. Entsprechend kann beim Ablaufen der Start des Ablaufvorganges zu denselben Zwecken verschoben werden.

Dabei wird vorteilhaft gemäß Anspruch 4 die jeweilige Startverstellung individuell für einzelne Behälterplätze vorgenommen. Damit lassen sich individuelle Schwankungen der Auffüll- bzw. Ablaufgeschwindigkeit ausgleichen, und es können auch aus irgendwelchen Gründen teilweise verstopfte Behälterplätze so eingestellt werden, daß sie die jeweiligen Stoppegel im Sichtfeld der Kamera erreichen und daher rechtzeitig steuerbar sind.

Dabei sind vorteilhaft die Merkmale des Anspruches 5 vorgesehen. Die Behälterplätze werden derart gesteuert, daß der Stoppegel jeweils am Ende des Betriebssektors, also des Auffüllsektors bzw. des Füllsektors erreicht wird. Dadurch können die zur Verfügung stehenden Zeiten für möglichst langsame und ruhige Getränkeströmung optimal ausgenutzt werden.

Weiterhin vorteilhaft sind die Merkmale des Anspruches 6 vorgesehen. Die Ermittlung der erfaßten Behälterplätze kann unmittelbar aus dem Bild erfolgen, beispielsweise durch Bildauswertung von an den Behälterplätzen angebrachten Nummern. Wird jedoch die Winkelposition des Füllers laufend ermittelt und der Bildauswerteinrichtung eingegeben, was auf einfache konventionelle Weise erfolgen kann, so wird die Bildauswerteinrichtung entlastet.

Vorteilhaft sind die Merkmale des Anspruches 7 vorgesehen. Als Füllparameter kann beispielsweise die Auffüll- oder die Ablaufgeschwindigkeit ermittelt werden oder der ermittelte Umfangswinkel bei Erreichen eines bestimmten Pegels. Als defekt ermittelte Behälterplätze können für den weiteren Betrieb stillgesetzt oder in einer Liste zur Berücksichtigung bei der nächsten Maschinenüberholung erfaßt werden. Es kann auch nach Erreichen des Stoppegels überprüft werden, wie weit sich nach Abschalten des entsprechenden Ventiles der Pegel noch ändert. Dies gibt Aufschluß über ordnungsgemäße Funktion des jeweiligen Ventiles.

Vorteilhaft sind die Merkmale des Anspruches 8 vorgesehen. Wird z.B. das Ablaufen bei einem bestimmten unteren Stoppegel im Ablaufbehälter gestoppt, so kann in diesem Höhenbereich der Ablaufbehälter mit verringertem Querschnitt vorgesehen sein. Dadurch ergibt sich eine wesentlich erhöhte Ablesegenauigkeit. Entsprechend kann auch im Bereich eines oberen, das Auffüllen beendenden Stoppegels der Querschnitt zu demselben Zweck reduziert sein.

In den Zeichnungen ist die Erfindung beispielsweise und schematisch dargestellt. Es zeigen:
- Fig. 1: eine stark schematisierte Draufsicht auf einen Getränkefüller mit zwei Videokameras,
- Fig. 2: eine Ansicht eines Behälterplatzes im Schnitt nach Linie 2 - 2 in Fig. 1,
- Fig. 3: eine Ansicht eines Abmeßbehälters in Ansicht gemäß Fig. 2 in einer Ausführungsvariante und
- Fig. 4: eine Videokamera mit ihrem Sichtfeld und dessen Anzeige auf einem Monitor.

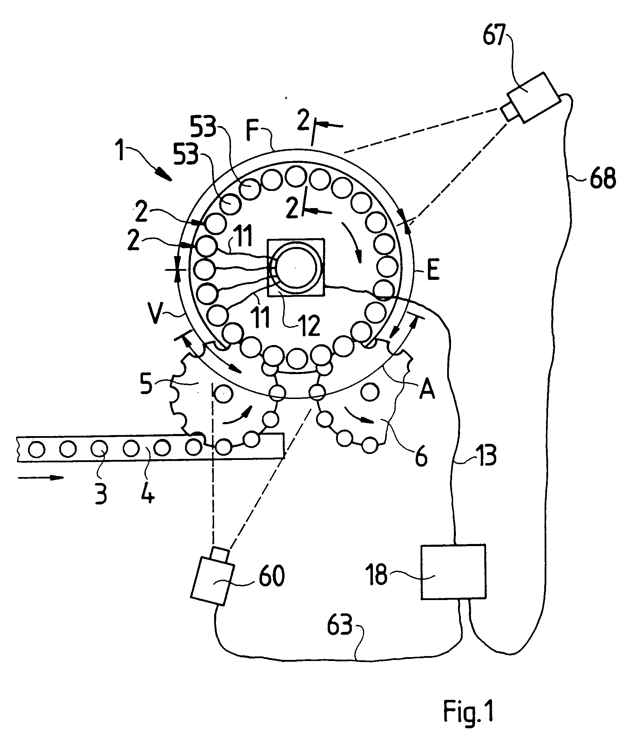

Fig. 1 zeigt in Draufsicht einen rotierenden Füller 1 üblicher Bauart, der zum Füllen von Getränken dient. Der Füller rotiert im Uhrzeigersinn. An seinem Umfang sind Behälterplätze 2 beabstandet vorgesehen, denen Behälter 3 von einem Transportband 4 über einen Einlaufstern 5 zugeführt werden.

Die auf den Behälterplätzen 2 um den Füller transportierten Behälter 3 verlassen den Füller 1 über einen Auslaufstern 6, von dem sie auf weiterverarbeitende Einrichtungen, wie z.B. Transportbänder, Verschließer od. dgl. übergeben werden.

Bei den Behältern 3 kann es sich um alle üblicherweise für Getränke verwendeten Behälter handeln, wie beispielsweise Glasflaschen, Kunststoffflaschen, Blechdosen od. dgl.

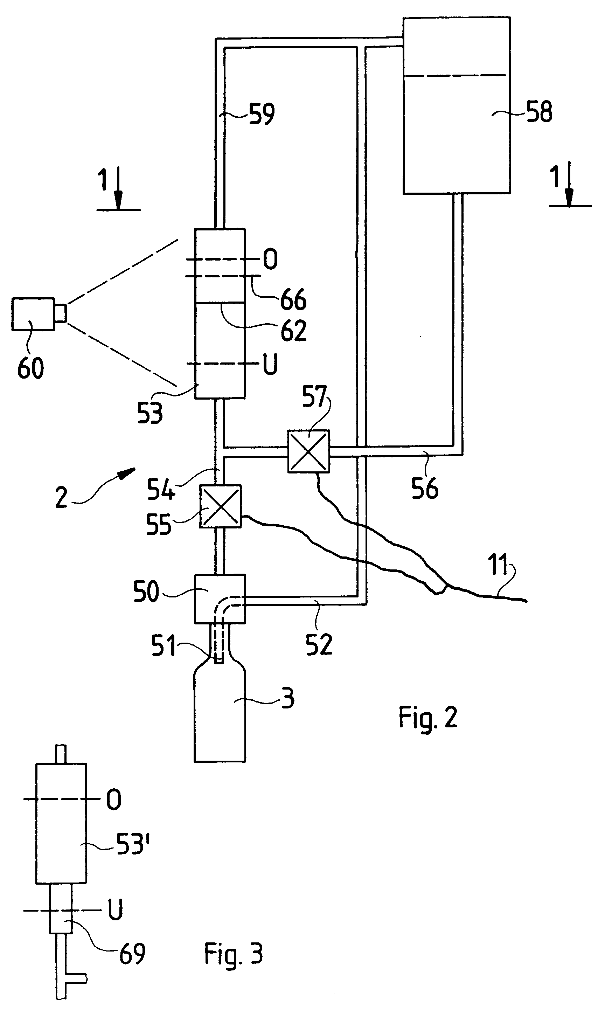

Die hier nicht näher interessierenden Einzelheiten des Füllers 1 sind weggelassen. Die wesentlichen Einrichtungen eines Behälterplatzes sind in Fig. 2 dargestellt.

Als Behälter 3 ist hier eine Flasche dargestellt, die in Abdichtung unter einem Dichtglied 50 steht. Im dargestellten Fall ist der Behälterplatz zum Abfüllen karbonisierter Getränke unter Druck ausgebildet. Zwischen dem Dichtglied 50 und dem Behälter 3 ist daher eine gute Randabdichtung erforderlich. Zum Erleichtern des Füllens ragt aus dem Dichtglied 50 ein gestrichelt dargestelltes Rückgasrohr 51 in den Behälter 3, welches an eine Rückgasleitung 52 angeschlossen ist.

Hubeinrichtungen zur vertikalen Bewegung des Dichtgliedes 50 gegen den Behälter 3 oder des Behälters 3 gegen das Dichtglied 50 können in bekannter konventioneller Weise ausgebildet sein und sind zur Vereinfachung in den Figuren weggelassen.

Das Getränk, z.B. Bier, wird durch Ablaufen aus einem Abmeßbehälter 53 gefüllt. Der Ablauf aus dem Abmeßbehälter 53 erfolgt über eine Ablaufleitung 54, die von einem z.B. elektrisch fernsteuerbaren Ablaufventil 55 beherrscht wird. Dabei wird im Ausführungsbeispiel das in den Behälter 3 abzufüllende Volumen dadurch eingestellt, daß der Ablauf zwischen einem oberen Stoppegel O und einem unteren Stoppegel U erfolgt.

Zum Wiederauffüllen des Abmeßbehälters 53 ist dieser über eine Auffülleitung 56 mit fernsteuerbarem Auffüllventil 57 an einen Getränkevorratsbehälter 58 angeschlossen.

Zum Füllen eines Behälters 3 wird zunächst das Auffüllventil 57 geöffnet, so daß der Abmeßbehäler 53 bis zum oberen Stoppegel O gefüllt wird. Dann wird das Auffüllventil 57 geschlossen und das Ablaufventil 55 geöffnet, bis der untere Stoppegel U erreicht ist. Das Ablaufventil 55 wird dann geschlossen. Nun ist das Volumen in den Behälter 3 gelaufen, das der Pegeldifferenz O - U im Abmeßbehälter 53 entspricht. Durch unterschiedliche Einstellung der Stoppegel O bzw. U kann das abzufüllende Volumen unterschiedlichen Volumina der Behälter 3 angepaßt werden.

Es ist auch möglich, den Abmeßbehälter 53 restlos zu füllen und nur den unteren Stoppegel U gesteuert einzusetzen. Ferner ist es möglich, den Abmeßbehälter 53 jeweils restlos leerlaufen zu lassen und nur den oberen Stoppegel O zu verwenden. Hierbei muß jedoch auf die Vorteile des schaumfreien Unterfüllens im Abmeßbehälter 53 verzichtet werden.

Im dargestellten Ausführungsbeispiel, in dem der Behälter 3 unter Druck gefüllt wird, ist das obere Ende des Abmeßbehälters 53 über eine Gasleitung 59 an den Gasraum im Getränkevorratsbehälter 58 angeschlossen, an den auch die Rückgasleitung 52 angeschlossen ist. Im Falle des Füllens stiller Getränke kann auf die Gasleitungen 52 und 59 verzichtet werden, ebenso wie auf eine Abdichtung zwischen dem Dichtglied 50 und dem Behälter 3. Anstelle des Rückgasrohres 51 kann dann beispielsweise ein Kurzfüllrohr vorgesehen sein.

Zum erwünschten und aus Gründen der Eichgesetze vorgeschriebenen hochgenauen Befüllen der Behälter 3 ist es erforderlich, den oberen Stoppegel O und den unteren Stoppegel U im Abmeßbehälter 53 hochgenau einzustellen und dementsprechend die Ventile 55 und 57 exakt zum richtigen Zeitpunkt zu schließen.

Dies kann zunächst dadurch erleichtert werden, daß im Bereich eines zu überwachenden Stoppegels, beispielsweise des unteren Stoppegels U der Querschnitt des Abmeßbehälters 53', der in einer Variante in Fig. 3 dargestellt ist, in einem unteren Bereich 69 gegenüber seinen übrigen Bereichen reduziert ist. Dadurch kann die Ablesegenauigkeit am unteren Stoppegel U wesentlich erhöht werden.

Entsprechende Maßnahmen können auch im Bereich des oberen Stoppegels O getroffen sein.

Um eine genaue Überwachung der Stoppegel O und U zu ermöglichen, sind die Abmeßbehälter 53 bzw. 53' aus durchsichtigem Material, z.B. Glas, ausgebildet, wenigstens in bestimmten, einen Einblick ermöglichenden Bereichen. Außerhalb des Füllers ist stationär eine Videokamera 60 vorgesehen, die Abmeßbehälter 53 an mehreren Behälterplätzen 2 in ihrem Sichtfeld 61 erfaßt, die in Pfeilrichtung durch das stationäre Sichtfeld laufen.

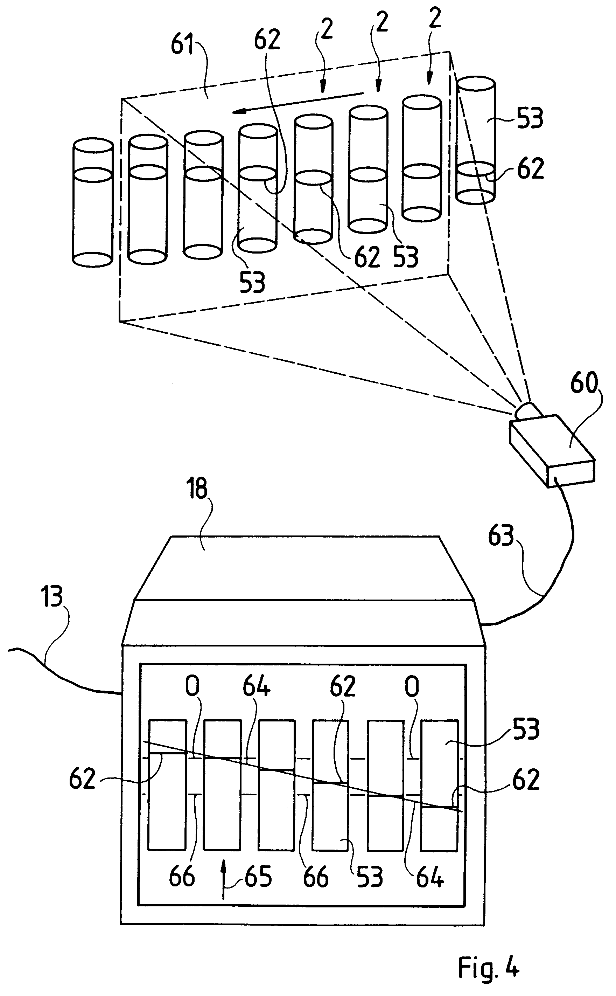

In Fig. 4 (oben) ist auch der der Pegel 62 in den Abmeßbehältern 53 dargestellt. Man kann erkennen, wie bei laufendem Auffüllen der Pegel 62 ansteigt, wenn die Abmeßbehälter 53 durch das Sichtfeld 61 laufen.

Fig. 1 zeigt in der Draufsicht auf den Füller 1 dessen unterschiedliche Betriebssektoren. Nach Einlaufen der Behälter 3 in den Füller 1 werden sie zunächst in einem Vorspannsektor V mit Spanngas beaufschlagt, beispielsweise durch Öffnen eines in Fig. 2 nicht dargestellten Ventiles in der Rückgasleitung 52, die dann als Vorspannleitung dient. Nach Beendigung des Vorspannsektors V beginnt der Füllsektor F, in dem die Behälter 3 gefüllt werden. Danach kommt der Entlastungssektor E, in welchem z.B. über nicht dargestellte Ventile an den Dichtgliedern 50 der Druck im Kopfraum der gefüllten Behälter 3 entlastet wird, um sie drucklos über den Auslaufstern 6 vom Füller 1 abführen zu können.

Das Auffüllen der Abmeßbehälter 53 geschieht außerhalb des Füllsektors F in dem dargestellten Auffüllsektor A, der, in Umlaufrichtung des Füllers gesehen, im Entlastungssektor E beginnt und im Vorspannsektor V endet.

Die Kamera 60, die gemäß Darstellung der Fig. 4 zur Überwachung des oberen Stoppegels O dient, ist, wie Fig. 1 zeigt, derart aufgestellt, daß sie mit ihrem Sichtfeld 61 den Endbereich des Auffüllsektors A betrachtet. Dort soll das Auffüllen der Abmeßbehälter 53 beendet sein, also der in Fig. 4 dargestellte Pegel 62 in den Abmeßbehältern 53 den oberen Stoppegel O erreichen.

Die Kamera 60 ist über eine Leitung 63 an eine Bildauswerteinrichtung 18 angeschlossen, die auf dem dargestellten Monitorschirm zu Vergleichszwecken das Sichtfeld 61 darstellt. Es sind die erfaßten Behälterplätze mit den Abmeßbehältern 53 und den darin erkannten Pegeln 62 dargestellt.

Man kann auf dem Monitor der Bildauswerteinrichtung 18 erkennen, daß in der Durchlaufrichtung der Abmeßbehälter 53 von rechts nach links die Pegel 62 entlang der Geraden 64 ansteigen. Mit der gestrichelten Linie O ist der zu überwachende obere Stoppegel eingezeichnet, der der Bildauswerteinrichtung, z.B. von einem Steuerpult eingegeben werden kann. Wird in einem Behälter, und zwar im dargestellten Beispiel an der Stelle 65, der obere Stoppegel O erreicht, so gibt die Bildauswerteinrichtung 18 ein Signal ab, um das Auffüllventil 57 zu schließen.

Wie Fig. 1 zeigt, ist zu diesem Zweck die Bildauswerteinrichtung 18 mit einer Leitung 13 an einen Drehverteiler 12 des Füllers 1 angeschlossen, von dem Leitungen 11, beispielsweise Busleitungen zur Ermöglichung der Adressansteuerung einzelner Ventile an einzelnen Behälterplätzen, zu den einzelnen Behälterplätzen 2 verlaufen, an denen sie in nicht dargestellter Weise zur Steuerung der Ventile 55 und und 57 angeschlossen sind.

Erreicht also, wie in Fig. 4 dargestellt, ein bestimmter Behälterplatz, der z.B. innerhalb eines Füllers 1 eine bestimmte Platznummer hat, den oberen Stoppegel O an der Stelle 65, so wird genau zu diesem Behälterplatz ein Signal zum Abschalten des Auffüllventiles 57 gegeben. Die Ermittlung des zugehörigen Behälterplatzes kann auf geeignete Weise erfolgen, beispielsweise durch Erkennen individueller Kennzeichnungen durch die Bildauswerteinrichtung oder durch Abzählen der Behälterplätze mittels einer Lichtschranke gegenüber einer Nullmarke.

Um die Präzision beim Einstellen des oberen Stoppegels O zu erhöhen, kann ein etwas tiefer liegender Pegel 66 (in Fig. 4 gestrichelt auf dem Monitorbild eingezeichnet) vorgegeben sein, bei dessen Erreichen an das Ablaufventil 57 ein Drosselsignal gegeben wird, um zwischen dem Pegel 66 und dem Stoppegel O langsamer zu füllen.

Die Bildauswerteinrichtung 18 erkennt bei Betriebsbeginn des Füllers, ob im erfaßten Sichtfeld 61 der Pegel 62 in den Abmeßbehältern 53 überhaupt den oberen Stoppegel O erreicht. Ist dies noch nicht der Fall oder läuft der Füller so schnell, daß innerhalb der im Auffüllsektor A zur Verfügung stehenden Zeit der obere Stoppegel O noch nicht erreicht wird, so kann die Bildauswerteinrichtung 18 ein Signal zum Verstellen des Anfangszeitpunktes des Auffüllsektors A geben. Entsprechend in anderer Richtung wird verstellt, wenn im Sichtfeld 61 der obere Stoppegel O bereits überschritten ist.

Es können auch einzelne Ausreißer vorliegen, z.B. einzelne Behälterplätze 2, die verstopft sind oder bei denen das Auffüllventil 57 nicht richtig öffnet. Diese werden einzeln erkannt, und es besteht die Möglichkeit, bei diesen individuell die Öffnung des Auffüllventiles 57 über entsprechende Steuerung durch die Bildauswerteinrichtung 18 zu einem geeigneten Startwinkel zu verlegen.

Zur Überwachung des unteren Stoppegels U beim Ablaufen des Getränks aus dem Abmeßbehälter 53 in einen Getränkebehälter 3 ist eine weitere Kamera 67 vorgesehen, die über eine Leitung 68 ebenfalls an die Bildauswerteinrichtung 18 angeschlossen ist. Diese Kamera 67 betrachtet den Endbereich des Füllsektors F, bei dem die Füllung der Behälter 3 beendet wird, also der untere Stoppegel U im Abmeßbehälter 53 erreicht wird. Vergleicht man mit Fig. 4, so sind die Verhältnisse entsprechend. Abweichend davon ist lediglich folgendes:

Die Pegel 62 in den Abmeßbehältern 53 steigen nicht, wie in Fig. 4 dargestellt, in Laufrichtung an, sondern fallen ab und erreichen den unteren Stoppegel U, der beispielsweise anstelle des Pegels 66 auf dem Monitorbild der Fig. 4 liegt. Die Gerade 64, die den Anstieg der Pegel darstellt, würde in diesem Falle in anderer Richtung verlaufen, also von rechts oben nach links unten. Es kann auch in diesem Falle ein dem Pegel 66 entsprechender vorgeschalteter Pegel vorgesehen sein, der beispielsweise anstelle des Pegels O liegen kann und bei dessen Erreichen ein Drosselsignal gegeben wird.

Das von der Kamera 67 ermittelte Bild wird auf die geschilderte Weise ausgewertet, und es werden Stopsignale an das Ablaufventil 55 des jeweils zugeordneten Behälterplatzes gegeben, wenn bei diesem der Pegel im Abmeßbehälter 53 den unteren Stoppegel U erreicht.

Auch in diesem Fall kann der Startwinkel, also der Umlaufwinkel, an dem das Ablaufventil 55 geöffnet wird, verstellt werden, um die Beobachtung des Erreichens des unteren Stoppegels U im Sichtfeld der Kamera 67 zu ermöglichen. Diese Verstellung kann wiederum gemeinsam für alle Behälterplätze oder zur Berücksichtigung individueller Unterschiede in der Ablaufgeschwindigkeit einzeln erfolgen.

## Patentansprüche

1. Rotierender Füller zum volumetrischen Abfüllen von Getränken in Behälter, mit einer Vielzahl von auf seinem Umfang beabstandet umlaufenden Behälterplätzen mit Abmeßbehältern, die aus einem Getränkevorrat auffüllbar sind und aus denen das Getränk in die Getränkebehälter abläuft, sowie mit Steuereinrichtungen, die über Pegelerkennung in den Abmeßbehältern das Ablaufvolumen steuern, **dadurch gekennzeichnet**, daß die Abmeßbehälter (53) durchsichtig ausgebildet sind und daß wenigstens eine die Abmeßbehälter (53) mehrerer benachbarter Behälterplätze (2) betrachtende stationär aufgestellte Videokamera (60, 67) vorgesehen ist sowie eine Bildauswerteinrichtung (18) mit Einrichtungen zur verfolgenden Überwachung der Abmeßbehälter (53) im Sichtfeld der Kamera (60, 67) unter Ermittlung der Pegel (62) in diesen in unterschiedlichen Winkelpositionen, zur Ermittlung der erfaßten Behälterplätze (2) und zur Abgabe von Steuersignalen für fernsteuerbare Ventile (55, 57) an den ermittelten Behälterplätzen (2), wobei eine den Bereich des Auffüllstops betrachtende Kamera (60) zur Steuerung eines Auffüllventiles (57) und/oder eine den Bereich des Ablaufstops betrachtende Kamera (67) zur Steuerung eines Ablaufventiles (55) dient.

2. Getränkefüller nach Anspruch 1, **dadurch gekennzeichnet**, daß die Bildauswerteinrichtung (18) wenigstens einen vor dem Stoppegel (O, U) erreichten Pegel (66) ermittelt zur Abgabe von Drosselsignalen.

3. Getränkefüller nach einem der vorhergehenden Ansprüche, **dadurch gekennzeichnet**, daß die Bildauswerteinrichtung (18) bei Erreichen des Stoppegels (O, U) in den Abmeßbehältern (53) die Winkelposition (65) ermittelt und in Abhängigkeit von dieser den Startwinkel des Auffüllsektors (A) oder des Füllsektors (F) verstellt.

4. Getränkefüller nach Anspruch 3, **dadurch gekennzeichnet**, daß die bei Erreichen eines Stoppegels (O, U) vorliegenden Winkelpositionen einzelnen Behälterplätzen (2) zugeordnet ermittelt werden und in Abhängigkeit von diesen individuelle Startsignale für den Auffüll- und/oder Ablaufbetrieb an die zugeordneten Behälterplätze bei dem nächsten Umlauf des Füllers (1) gegeben werden.

5. Getränkefüller nach einem der Ansprüche 3 oder 4, **dadurch gekennzeichnet**, daß die Steuerung des Auffüll- oder Ablaufbeginns derart erfolgt, daß der Stoppegel (O, U) am Ende des jeweiligen Betriebssektors (A, F) erreicht wird.

6. Getränkefüller nach einem der vorhergehenden Ansprüche, **dadurch gekennzeichnet**, daß Einrichtungen zur laufenden Ermittlung der Winkelposition des Füllers (1) und zu deren Übertragung an die Bildauswerteinrichtung (18) vorgesehen sind.

7. Getränkefüller nach einem der vorhergehenden Ansprüche, **dadurch gekennzeichnet**, daß die Bildauswerteinrichtung (18) hinsichtlich der ermittelten Füllparameter außerhalb des Normbereichs liegende Behälterplätze (2) ermittelt.

8. Getränkefüller nach einem der vorhergehenden Ansprüche, **dadurch gekennzeichnet**, daß die Abmeßbehälter (53') im Bereich (69) eines zu ermittelnden Stoppegels (U) einen verringerten Querschnitt aufweisen.

## Claims

1. Rotating beverage filling machine for volumetrically filling containers with beverages with a plurality of rotating container stations spaced over its periphery with metering containers which may be refilled from a beverage supply and from which the beverage drains into the beverage containers and with control devices which control the drain volume by way of level recognition in the metering containers, characterised in that the metering containers (53) are of transparent construction and that at least one stationarily arranged video camera (60, 67) is provided which views the metering containers (53) of a plurality of adjacent container stations (2), and an image analysing device (18) with devices for tracking monitoring the metering containers (53) in the field of view of the camera (60, 67) whilst determining the levels (62) in them at different angular positions, for determining the viewed container stations (2) and for issuing control signals for remote controllable valves (55, 57) at the determined container stations (2), whereby one camera (60) viewing the region of the filling stop point serves to control a filling valve (57) and/or one camera (67) viewing the region of the draining stop point serves to control a drain valve (55).

2. Beverage filling machine as claimed in Claim 1, characterised in that the image analysing device (18) detects at least one level (66) reached before the stop level (O, U) to issue throttling signals.

3. Beverage filling apparatus as claimed in one of the preceding claims, characterised in that the image analysing device (18) determines the angular position (65) when the stop level (O, U) is reached in the metering containers (53) and adjusts the starting angle of the refilling sector (A) or the filling sector (F) in dependence on it.

4. Beverage filling apparatus as claimed in Claim 3, characterised in that the angular positions associated with individual container stations (2) when a stop level (O, U) is reached are determined and individual start signals are issued in dependence on them for the refilling and/or draining operation to the associated container stations on the next rotation of the filler (1).

5. Beverage filling apparatus as claimed in one of Claims 3 or 4, characterised in that the control of the initiation of the refilling or draining process is effected such that the atop level (O, U) is reached at the end of the respective operational sector (A, F).

6. Beverage filling apparatus as claimed in one of the preceding claims, characterised in that devices are provided for continuously determining the angular position of the filler (1) and for transferring it to the image analysing device (18).

7. Beverage filling apparatus as claimed in one of the preceding claims, characterised in that the image analysing device (18) detects container stations (2) lying outside the normal range as regards the determined filling parameters.

8. Beverage filling apparatus as claimed in one of the preceding claims, characterised in that the metering containers (53') have a reduced cross-section in the region (69) of a stop level (U) to be detected.

## Revendications

1. Machine rotative d'embouteillage pour le déversement volumétrique de boissons dans des récipients, comprenant un grand nombre de postes à récipients tournant à distance sur son pourtour, et comportant des réceptacles mesureurs qui peuvent être remplis à partir d'une réserve en boisson, et à partir desquels la boisson s'écoule dans les récipients à boisson ; ainsi que des dispositifs de commande qui commandent le volume d'écoulement par identification de niveaux dans les réceptacles mesureurs, caractérisée par le fait que les réceptacles mesureurs (53) sont de réalisation translucide ; et par le fait que sont prévus au moins une caméra vidéo (60, 67) implantée de manière fixe, observant les réceptacles mesureurs (53) de plusieurs postes voisins (2) à récipients, ainsi qu'un dispositif (18) interprétateur d'images muni de dispositifs de surveillance, avec effet de poursuite, des réceptacles mesureurs (53) situés dans le champ de vision de la caméra (60, 67), avec détermination des niveaux (62) renfermés par ces derniers dans différentes positions angulaires, en vue de déterminer les postes détectés (2) à récipients, et en vue de délivrer des signaux de commande destinés à des soupapes (55, 57) commandables à distance aux postes déterminés (2) à récipients, une caméra (60), observant la région de l'arrêt du remplissage, servant à commander une soupape de remplissage (57) et/ou une caméra (67), observant la région de l'arrêt de l'écoulement, servant à commander une soupape d'écoulement (55).

2. Machine d'embouteillage selon la revendication 1, caractérisée par le fait que le dispositif (18) interprétateur d'images détermine au moins un niveau (66) atteint avant le niveau d'arrêt (O, U), en vue de délivrer des signaux d'étranglement.

3. Machine d'embouteillage selon l'une des revendications précédentes, caractérisée par le fait que, lorsque le niveau d'arrêt (O, U) est atteint dans les réceptacles mesureurs (53), le dispositif (18) interprétateur d'images détermine la position angulaire (65) et règle, en fonction de cette dernière, l'angle de départ du secteur de remplissage (A) ou du secteur d'emplissage (F).

4. Machine d'embouteillage selon la revendication 3, caractérisée par le fait que les positions angulaires, présentes lorsqu'un niveau d'arrêt (O, U) est atteint, sont déterminées en étant affectées à des postes individuels (2) à récipients et, en fonction desdites positions, des signaux individuels de départ sont délivrés aux postes à récipients associés, pour le mode remplissage et/ou écoulement, lors du tour de rotation suivant de la machine d'embouteillage (1).

5. Machine d'embouteillage selon l'une des revendications 3 ou 4, caractérisée par le fait que la commande du début du remplissage ou de l'écoulement a lieu de façon telle que le niveau d'arrêt (O, U) soit atteint à la fin du secteur fonctionnel considéré (A, F).

6. Machine d'embouteillage selon l'une des revendications précédentes, caractérisée par le fait que des dispositifs sont prévus pour déterminer en continu la position angulaire de la machine d'embouteillage (1), et pour la transmettre au dispositif (18) interprétateur d'images.

7. Machine d'embouteillage selon l'une des revendications précédentes, caractérisée par le fait que le dispositif (18) interprétateur d'images effectue une détermination de postes (2) à récipients situés en dehors de la plage normalisée quant aux paramètres d'emplissage établis.

8. Machine d'embouteillage selon l'une des revendications précédentes, caractérisée par le fait que les réceptacles mesureurs (53') présentent une section transversale réduite dans la région (69) d'un niveau d'arrêt (U) devant être déterminé.
